(19) **Europäisches Patentamt / European Patent Office / Office européen des brevets**

(11) **EP 3 694 736 B1**

(12) **FASCICULE DE BREVET EUROPEEN**

(45) Date de publication et mention de la délivrance du brevet:
**01.12.2021 Bulletin 2021/48**

(21) Numéro de dépôt: **18785309.8**

(22) Date de dépôt: **05.10.2018**

(51) Int Cl.:
**B60W 20/10** *(2016.01)*  **B60W 20/40** *(2016.01)*
**B60K 6/442** *(2007.10)*  **B60K 6/547** *(2007.10)*
**B60W 10/02** *(2006.01)*  **B60W 10/06** *(2006.01)*
**B60W 10/08** *(2006.01)*  **B60W 10/11** *(2012.01)*
**B60W 30/19** *(2012.01)*  **B60W 50/00** *(2006.01)*
**B60W 20/30** *(2016.01)*  **B60W 20/20** *(2016.01)*
**B60W 20/19** *(2016.01)*

(86) Numéro de dépôt international:
**PCT/EP2018/077159**

(87) Numéro de publication internationale:
**WO 2019/072717 (18.04.2019 Gazette 2019/16)**

(54) **PROCÉDÉ DE PILOTAGE D'UN GROUPE MOTOPROPULSEUR HYBRIDE ÉLECTRIQUE**

VERFAHREN ZUR STEUERUNG EINER ELEKTRISCHEN HYBRIDANTRIEBSEINHEIT

METHOD FOR CONTROLLING AN ELECTRIC HYBRID POWER UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2017 FR 1759425**

(43) Date de publication de la demande:
**19.08.2020 Bulletin 2020/34**

(73) Titulaires:
• **Renault S.A.S.**
  **92100 Boulogne-Billancourt (FR)**
• **Nissan Motor Co. Limited.**
  **Yokohama-shi, Kanagawa 220-8623 (JP)**

(72) Inventeurs:
• **MERIENNE, Ludovic**
  **91190 Gif-sur-Yvette (FR)**
• **BEN-BELDI, Nesrine**
  **75017 Paris (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**WO-A1-2016/194172    WO-A1-2016/194172
FR-A1- 3 007 696    US-A1- 2011 098 151
US-A1- 2011 098 151    US-A1- 2017 122 419
US-A1- 2017 122 419**

EP 3 694 736 B1

## Description

L'invention concerne le contrôle des transmissions automatiques de groupe motopropulseur (GMP) de véhicule, électrique ou hybride, comportant une boîte de vitesses qui regroupe le couple de plusieurs actionneurs (moteurs thermiques et machines électriques) en direction des roues du véhicule, sur différents rapports de transmission, par l'intermédiaire d'un différentiel. L'invention concerne de préférence le contrôle d'une transmission de groupe motopropulseur hybride électrique non rechargeable, également connu sous la dénomination anglo-saxonne « Hybrid Electric Vehicle » ou sous l'acronyme correspondant « HEV », mais peut aussi s'appliquer à une transmission de groupe motopropulseur hybride rechargeable également connu sous la dénomination anglo-saxonne « Plug-in Hybrid Electric Vehicle » ou sous l'acronyme correspondant « PHEV ».

Plus précisément, elle a pour objet un procédé de pilotage d'un groupe motopropulseur de véhicule automobile comprenant un moteur à combustion interne, une machine électrique principale, une machine électrique secondaire et au moins une boîte de vitesses à crabots pilotés comprenant un premier arbre primaire connecté mécaniquement avec le moteur à combustion interne et avec la machine électrique secondaire, un second arbre primaire connecté mécaniquement avec la machine électrique principale et un arbre secondaire.

L'invention s'applique en particulier aux groupes motopropulseurs de ce type, dans lesquels l'engagement et le désengagement des rapports est assuré par des systèmes de couplage pilotés sans synchroniseur, à crabots ou dents plates, appelés aussi « clabots », mobiles axialement sur un arbre. Les crabots sont pilotés par l'intermédiaire de fourchettes de commande en direction de pignons de vitesses fixes axialement, tournant fou sur leur arbre. L'engagement des crabots mobiles sur les pignons, met en prise l'arbre et le pignon, pour transmettre le couple aux roues sur le rapport de transmission engagé. Des groupes motopropulseurs de ce type sont divulgués dans les documents WO 2016/194172 A1, US 2011/098151 A1 et US 2017/122419 A1.

La publication FR 3 007 696, à laquelle on pourra se référer, décrit une architecture de transmission hybride à trois arbres et deux machines électriques, dont une machine principale et une machine secondaire. Les deux machines électriques sont connectées électriquement à une batterie électrique de stockage du véhicule. La transmission utilise trois systèmes de couplage à crabots spécifiques. C'est une boîte de vitesses de type robotisée, possédant un comportement mécanique similaire à une boîte manuelle. Les changements de rapport s'effectuent de façon automatisée, à l'aide d'un système d'actionnement permettant d'engager et de désengager les crabots.

Avec une telle architecture, il est possible d'engager des rapports thermiques purs dans lesquels seul le premier arbre primaire est connecté mécaniquement à l'arbre secondaire, des rapports électriques purs dans lesquels seul le second arbre primaire est connecté mécaniquement à l'arbre secondaire et des rapports hybrides dans lesquels les premiers et second arbres primaires sont tous deux connectés mécaniquement à l'arbre secondaire. Dans le cas d'un rapport hybride, un rapport de transmission thermique correspond à la liaison mécanique entre le premier arbre primaire et l'arbre secondaire, et un rapport de transmission électrique correspond à la liaison mécanique entre le second arbre primaire et l'arbre secondaire.

Lorsque l'on souhaite quitter un rapport d'entrée hybride pour engager un rapport de sortie hybride, le rapport d'entrée et le rapport de sortie présentant des rapports de transmission thermique différents, on met en œuvre le procédé suivant. Dans un premier temps, on bascule du couple du premier arbre primaire sur le second arbre primaire. Lorsque le couple du premier arbre primaire est nul, on désengage le rapport de transmission thermique du rapport d'entrée. Ensuite, on synchronise le régime de rotation du premier arbre primaire pour préparer une phase ultérieure d'engagement du rapport de transmission thermique du rapport de sortie. Lorsque cet engagement est terminé, on bascule du couple du second arbre primaire sur le premier arbre primaire.

Pour basculer du couple du premier arbre primaire sur le second arbre primaire, une solution généralement utilisée consiste à diminuer le couple du moteur à combustion interne et à augmenter concomitamment le couple de la machine électrique principale. Une telle solution n'apporte toutefois pas pleinement satisfaction. En effet, la puissance mécanique délivrée par le moteur à combustion interne avant initialisation du changement de rapport de vitesses est souvent relativement plus importante que la puissance électrique disponible dans la batterie électrique de stockage alimentant la machine électrique principale. Dans ces conditions, il est impossible de compenser l'annulation du couple du moteur à combustion interne par une augmentation du couple de la machine électrique principale. Il s'ensuit l'apparition de phénomènes pouvant être perçus désagréablement par les utilisateurs, comme des trous d'accélération, des chocs ou à-coups, des ralentissements, des effets de « salut », etc.

Ces désagréments sont tout particulièrement perçus lors d'un changement de rapport de vitesses ayant lieu à une vitesse du véhicule élevée, par exemple de l'ordre de 80 km/h, avec une consigne conducteur d'accélération, ou encore suite à une demande de changement de rapport de vitesses à une vitesse élevée dans laquelle la machine électrique est déjà à son couple maximal et la batterie est dans des conditions de fonctionnement dégradées, par exemple en cas de températures froides.

Par ailleurs, le problème précité est tout particulièrement critique dans les groupes motopropulseurs hybrides électriques non rechargeables. En effet, les batteries électriques de stockage équipant de tels groupes délivrent une tension moins importante que les tensions délivrées par des batteries électriques de stockage équipant des groupes motopropulseurs hybrides électriques rechargeables, à état de charge égal.

Une batterie équipant un groupe motopropulseur rechargeable délivre typiquement une tension de 350 V à un état de charge de 50%. Dans les mêmes conditions, une batterie équipant un groupe motopropulseur non rechargeable délivre typiquement une tension de 180 V. Alimentée à 350 V, la machine électrique principale est typiquement capable de fournir une puissance mécanique de 70 kW, la machine électrique secondaire étant typiquement capable de délivrer 35 kW. Alimentée à 180 V, la machine électrique principale peut fournir 35 kW et la machine électrique secondaire peut fournir 18 kW. Avant initialisation du changement de rapport de vitesses, la puissance fournie par le moteur à combustion interne est typiquement de l'ordre de 70 kW. Ainsi, tout particulièrement dans le cas d'un groupe motopropulseur hybride électrique non rechargeable, les utilisateurs ressentent un important trou d'accélération ressenti comme un désagrément.

Ce désagrément est encore plus important dans le cas d'une rétrogradation du rapport de vitesses sous charge. Dans ce cas, la puissance délivrée par la machine électrique secondaire est généralement utilisée pour mettre en œuvre la synchronisation du premier arbre secondaire. La batterie électrique de stockage étant utilisée par la machine électrique secondaire, la machine électrique principale ne peut être que partiellement alimentée. Dans les conditions de l'exemple ci-dessus, la machine électrique principale ne peut délivrer que 17 kW. Il est alors ressenti un trou d'accélération particulièrement important, et ce alors que le conducteur s'attend à une augmentation du couple puisqu'il demande un rétrogradage sous charge.

Au vu de ce qui précède, l'invention a pour but de fournir un procédé de pilotage d'un groupe motopropulseur de véhicule automobile palliant les inconvénients précités.

Plus particulièrement, l'invention vise à permettre le changement de rapport de vitesses entre un rapport d'entrée hybride et un rapport de sortie hybride présentant un rapport de transmission thermique différent du rapport d'entrée, ou entre un rapport d'entrée électrique pur et un rapport de sortie hybride, occasionnant le moins de désagréments possibles pour les utilisateurs du véhicule.

À cet effet, il est proposé un procédé de pilotage d'un groupe motopropulseur de véhicule automobile comprenant un moteur à combustion interne, une machine électrique principale connectée électriquement avec une batterie de stockage, une machine électrique secondaire connectée électriquement avec ladite batterie de stockage, et au moins une boîte de vitesses à crabots pilotés comportant un premier arbre primaire connecté mécaniquement avec le moteur à combustion interne et avec la machine électrique secondaire, un second arbre primaire connecté mécaniquement avec la machine électrique principale, et un arbre secondaire, dans lequel on synchronise le régime de rotation du premier arbre primaire, puis on engage le rapport de transmission thermique d'un rapport de sortie, et on bascule du couple depuis le second arbre primaire sur le premier arbre primaire.

Selon une caractéristique générale de ce procédé, lorsque l'on synchronise le régime de rotation du premier arbre primaire, si la consigne de puissance est trop importante pour être atteinte par la machine électrique principale alimentée seulement par la batterie de stockage, on force la machine électrique secondaire en mode régénératif et on utilise la puissance électrique générée par la machine électrique secondaire pour fournir une puissance électrique d'appoint à la machine électrique principale.

Ainsi, on augmente, si nécessaire, la puissance électrique alimentant la machine électrique principale de sorte à pouvoir augmenter la puissance mécanique délivrée par la machine électrique principale. On évite ainsi l'apparition de trous d'accélération lorsque ceux-ci sont susceptibles d'apparaître avec des procédés de pilotage classiques. En ne mettant en œuvre cette alimentation d'appoint que lorsque cela est nécessaire, on évite de générer inutilement du bruit, d'augmenter la consommation de carburant et les émissions de polluants.

Selon un mode de mise en œuvre particulier, lorsque l'on fournit une puissance électrique d'appoint à la machine électrique principale, on couple ladite machine électrique principale et/ou ladite machine électrique secondaire à un convertisseur élévateur de tension.

De manière avantageuse, avant de synchroniser le régime de rotation du premier arbre primaire, on bascule du couple du premier arbre primaire sur le second arbre primaire, puis on désengage le rapport de transmission thermique d'un rapport d'entrée, et dans lequel, lorsque l'on bascule du couple du premier arbre primaire sur le second arbre primaire, si la consigne de puissance est trop importante pour être atteinte par la machine électrique principale alimentée seulement par la batterie de stockage, on force la machine électrique secondaire en mode régénératif et on utilise la puissance électrique générée par la machine électrique secondaire pour fournir une puissance électrique d'appoint à la machine électrique principale.

Avantageusement, lorsque l'on bascule du couple du premier arbre primaire sur le second arbre primaire, on détermine une première consigne du couple du moteur à combustion interne et une deuxième consigne du couple de la machine électrique secondaire, et on pilote le moteur à combustion interne et la machine électrique secondaire en fonction des première et deuxième consignes du couple, lesdites première et deuxième consignes étant déterminées en appliquant les équations :

$$P_{ice\_cible\_p1} = \min(P_{roues}, P_{hsg\_regen\_\max}, P_{ice\_\max})$$

$$T_{ice\_cible\_p1} = \frac{P_{ice\_cible\_p1}}{\omega_{ice}}$$

$$T_{hsg\_cible\_p1} = -\frac{P_{ice\_cible\_p1}}{\omega_{hsg}}$$

où $P_{ice\_cible\_p1}$ représente une première puissance cible à réaliser par le moteur à combustion interne,
$P_{roues}$ représente une consigne de puissance à fournir aux roues du véhicule,
$P_{hsg\_regen\_max}$ représente une puissance électrique maximale pouvant être obtenue par la machine électrique secondaire fonctionnant en mode régénératif,
$P_{ice\_max}$ représente la puissance maximale pouvant être délivrée par le moteur à combustion interne,
$T_{ice\_cible\_p1}$ représente la première consigne,
$\omega_{ice}$ représente le régime de rotation du moteur à combustion interne,
$T_{hsg\_cible\_p1}$ représente la deuxième consigne, et
$\omega_{hsg}$ représente le régime de rotation de la machine électrique secondaire.

Dans un mode de mise en œuvre, lorsque l'on synchronise le régime de rotation du premier arbre primaire, on détermine une troisième consigne de couple du moteur à combustion interne et une quatrième consigne de couple de la machine électrique secondaire, et on pilote le moteur à combustion interne et la machine électrique secondaire en fonction des troisième et quatrième consignes de couple, ladite troisième consigne et ladite quatrième consigne étant déterminées en appliquant les équations suivantes :

$$P_{ice\_cible\_p3} = \min(P_{roues}, P_{hsg\_regen\_\max}, P_{ice\_\max})$$

$$T_{ice\_cible\_p3} = \frac{P_{ice\_cible\_p3}}{\omega_{ice}} + T\_prop + T\_\text{int}$$

$$T_{hsg\_cible\_p3} = -\frac{P_{ice\_cible\_p3}}{\omega_{hsg}}$$

où $P_{ice\_cible\_p3}$ représente une deuxième puissance cible à réaliser par le moteur à combustion interne,
$P_{roues}$ représente une consigne de puissance à fournir aux roues du véhicule,
$P_{hsg\_regen\_max}$ représente une puissance électrique maximale pouvant être obtenue par la machine électrique secondaire fonctionnant en mode régénératif,
$P_{ice\_max}$ représente la puissance maximale pouvant être délivrée par le moteur à combustion interne,
$T_{ice\_cible\_p3}$ représente la troisième consigne,
$\omega_{ice}$ représente le régime de rotation du moteur à combustion interne,
$T_{hsg\_cible\_p3}$ représente la quatrième consigne,
$\omega_{hsg}$ représente le régime de rotation de la machine électrique secondaire,
T_prop est un terme de correction proportionnel, et
T_int est un terme de correction intégral.

On peut en outre prévoir que lorsque l'on synchronise le régime de rotation du premier arbre primaire, on met en œuvre une étape d'asservissement du couple du moteur à combustion interne et/ou du couple de la machine électrique secondaire avec un correcteur proportionnel.

Dans un mode de mise en œuvre, lors de ladite étape d'asservissement, on saisit dans une cartographie au moins un paramètre choisi parmi un écart entre un régime courant de rotation du premier arbre primaire et un régime cible de rotation, un type de synchronisation à réaliser et une dynamique du régime de rotation du moteur à combustion interne, on recueille une valeur de gain en sortie de ladite cartographie et on applique le gain recueilli dans ledit correcteur proportionnel.

Un tel mode de mise en œuvre permet de limiter le bruit, la consommation de carburant et les émissions de polluants occasionnés par le moteur à combustion interne lors du changement de rapport.

Dans un autre mode de mise en œuvre, lorsque l'on synchronise le régime de rotation du premier arbre primaire, on met en œuvre une étape d'asservissement du couple du moteur à combustion interne et/ou du couple de la machine électrique secondaire avec un correcteur intégral.

De manière avantageuse, ledit correcteur intégral est activé à partir d'un instant où l'écart entre une consigne de vitesse et une vitesse mesurée devient inférieur à un seuil prédéfini.

De manière avantageuse, lorsque l'on synchronise le régime de rotation du premier arbre primaire, on calcule au moins une consigne de couple et on met en œuvre une étape d'asservissement du couple du moteur à combustion interne et/ou du couple de la machine électrique secondaire au moyen d'un correcteur par contrôle anticipé paramétré avec ladite consigne de couple.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est un exemple d'architecture de groupe motopropulseur hybride simplifié,
- la figure 2 regroupe les courbes de passage de vitesse de la boîte de vitesses du groupe motopropulseur de la figure 1,
- la figure 3 est un exemple de mise en œuvre de procédé de pilotage selon l'invention,
- la figure 4 est un schéma-bloc de l'asservissement mis en œuvre dans le procédé de la figure 3, et
- les figures 5A, 5B et 5C sont des graphes illustrant respectivement l'évolution des couples délivrés par les actionneurs du groupe motopropulseur de la figure 1 au cours du procédé de la figure 3.

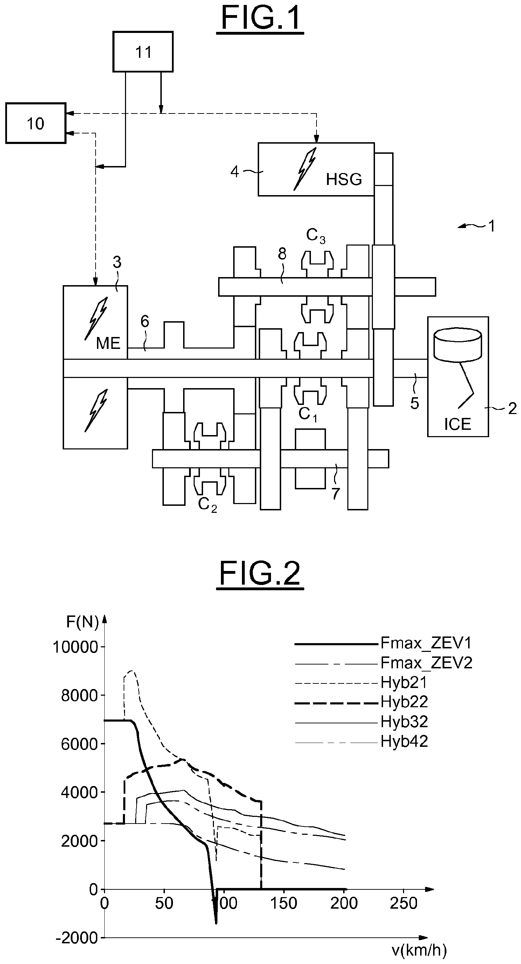

La figure 1 est un schéma fonctionnel de groupe motopropulseur (GMP) hybride 1, à trois arbres et deux machines électriques, utilisant trois systèmes de couplage à crabots, dont le fonctionnement est illustré par la publication citée. Le groupe motopropulseur 1 comporte trois actionneurs, en l'espèce un moteur à combustion interne 2 (ICE), une machine électrique principale 3 (MEP) et une machine électrique secondaire 4 (HSG). Le groupe motopropulseur 1 comprend un arbre primaire plein 5 relié au moteur 2, un arbre primaire creux 6 relié à la machine électrique principale 3, un arbre secondaire 7, et un arbre de renvoi 8 relié à la machine électrique secondaire 4. Les rapports sont enclenchés par trois coupleurs à crabots C1, C2, C3, dépourvus de synchroniseurs mécaniques.

La boîte de vitesses regroupe le couple du moteur 2, de la machine électrique principale 3, et de la machine électrique secondaire 4 sur l'arbre secondaire 7, en direction des roues du véhicule. Les changements de rapport s'effectuent sous le contrôle des trois coupleurs à crabots C1, C2, C3, disposés respectivement sur l'arbre primaire plein 5, sur l'arbre secondaire 6 et sur l'arbre de transfert 8. Le premier coupleur, dit coupleur primaire C1, placé sur l'arbre primaire plein 5, permet d'enclencher un rapport de transmission thermique ICE4 long à droite, et de coupler les deux arbres primaires à gauche. Le deuxième coupleur, dit coupleur secondaire C2, placé sur l'arbre secondaire, permet d'enclencher deux rapports de transmission électrique EV1 et EV2. Le troisième coupleur, dit coupleur de transfert C3, placé sur l'arbre de renvoi 8, permet de transférer le couple de la machine électrique secondaire sur l'arbre secondaire 7 (à droite), ou sur l'arbre primaire creux 6 (à gauche).

La boîte présente deux rapports de transmission électriques EV1 et EV2 pour le mouvement issu de la machine électrique principale 3, et quatre rapports de transmission thermiques ICE1, ICE2, ICE3 et ICE4 pour le mouvement issu de l'ensemble de la machine électrique secondaire 4 et du moteur à combustion interne 2. Leur combinaison permet à la boîte de disposer de 15 rapports de vitesses. Chaque rapport de vitesses transmet une force maximum à la roue en fonction de la vitesse de déplacement du véhicule. A titre d'exemple, on a représenté sur la figure 2 les courbes de passage pour certains d'entre eux. La vitesse de déplacement du véhicule V est exprimée en kilomètres/heure. La force aux roues maximale F en fonction de la vitesse, est exprimée en Newton (N), pour les deux vitesses électriques (ZEV1 et ZEV2), et quatre vitesses hybrides, appelés respectivement Hyb21, Hyb22, Hyb32, Hyb42. Le premier chiffre indique le rapport de transmission thermique de la boîte de vitesses. Le deuxième indique son rapport de transmission électrique.

La machine électrique principale 3 et la machine électrique secondaire 4 sont connectées électriquement avec une batterie électrique de stockage 9 comme cela est illustré sur la figure 1 par les lignes pointillées. Un convertisseur élévateur de tension 10 est connecté électriquement à la liaison électrique entre la batterie 9 et la machine électrique principale 3. Le convertisseur 10 est par ailleurs connecté électriquement à la liaison électrique entre la batterie 9 et la machine électrique secondaire 4. Le convertisseur 10 est également connu sous la dénomination anglo-saxonne comme un « dispositif step-up ».

Grâce au convertisseur élévateur de tension 10, la puissance mécanique fournie par la machine électrique principale 3 peut être considérablement augmentée. Dans l'exemple illustré, la machine électrique principale 3 typiquement alimentée à une tension de 230 V fournit une puissance de 30 kW sans le convertisseur 10. Avec le convertisseur 10, la machine électrique principale 3 est alimentée à une tension de 400 V et fournit une puissance de 70 kW. Le convertisseur 10 permet aussi d'augmenter la puissance électrique générée par la machine électrique secondaire 4. Dans l'exemple illustré, la machine électrique secondaire 4 est soumise à une tension de 230 V et génère une puissance électrique de 17 kW sans le convertisseur 10, alors qu'elle est soumise à une tension de 400 V et génère une puissance électrique de 40 kW avec le convertisseur 10.

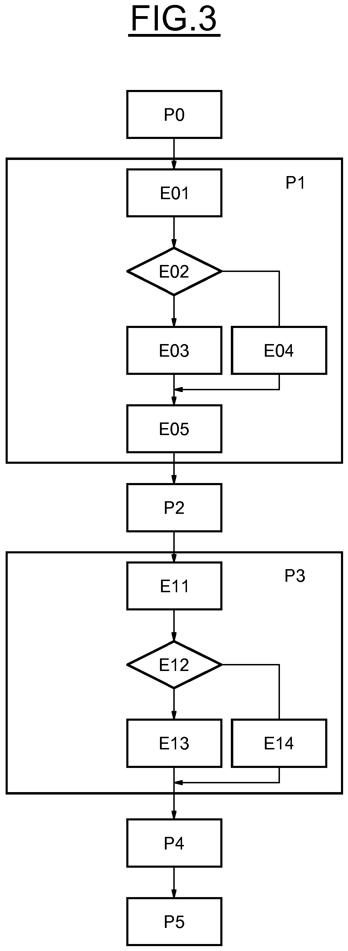

En référence à la figure 3, on a schématiquement représenté un exemple de procédé pouvant être mis en œuvre pour piloter le groupe motopropulseur de la figure 1. Le procédé de la figure 3 est destiné à être mis en œuvre lors d'un changement de rapport de vitesses depuis un rapport de vitesses d'entrée vers un rapport de vitesses de sortie. Plus précisément, le rapport de vitesses d'entrée et le rapport de vitesses de sortie sont deux rapports hybrides de la boîte de vitesses présentant chacun un rapport de transmission thermique distinct, ou un rapport électrique pur et un rapport hybride de la boîte de vitesses. En d'autres termes, les couples (rapport d'entrée, rapport de sortie) peuvent être (HybX2, HybY2), avec X≠Y, et (EVZ, HybAZ). Par exemple, la description du procédé qui va suivre sera faite dans le cas d'un changement de rapport de vitesses depuis un rapport d'entrée Hyb22 vers un rapport de sortie Hyb32.

Lors d'un état initial du procédé, la boîte de vitesse du groupe motopropulseur 1 est engagée selon le rapport de vitesses Hyb22. En d'autres termes, le rapport de transmission thermique ICE2 et le rapport de transmission électrique EV2 sont engagés.

À tout instant, on note :

$\omega_{ice}$ la vitesse de rotation du moteur à combustion interne 2,
$\omega_{mep}$ la vitesse de rotation de la machine électrique principale 3,
$\omega_{hsg}$ la vitesse de rotation de la machine électrique secondaire,
$\omega_7$ la vitesse de rotation de l'arbre secondaire 7,
$T_{ice}$ le couple délivré par le moteur à combustion interne 2,
$T_{mep}$ le couple délivré par la machine électrique principale 3,
$T_{hsg}$ le couple délivré par la machine électrique secondaire 4,
$T_7$ le couple sur l'arbre secondaire 7,
$P_{ice}$ la puissance du moteur à combustion interne 2,
$P_{mep}$ la puissance de la machine électrique principale 3,
$P_{hsg}$ la puissance de la machine électrique secondaire 4, et
$P_7$ la puissance reçue par l'arbre secondaire 7.

Le procédé comprend une phase d'initialisation P0 de détection d'une consigne de changement de rapport de vitesses depuis un rapport d'entrée vers un rapport de sortie nécessitant l'engagement d'un rapport de transmission thermique du rapport sortant. En d'autres mots, on détecte lors de la phase P0 une consigne de changement de rapport de vitesses depuis un rapport électrique pur vers un rapport hybride, ou depuis un rapport hybride vers un rapport hybride présentant un rapport de transmission thermique différent. Dans le cas illustré, on détecte une consigne de changement de rapport de vitesse depuis le rapport d'entrée Hyb22 vers le rapport de sortie Hyb32. Tant qu'une telle consigne n'est pas détectée, on répète de manière périodique la phase P0. Dès que cette consigne est détectée, on applique une phase P1.

La phase P1 a pour but de mettre en œuvre une bascule du couple de l'arbre 5 sur l'arbre 6 en vue du désengagement du rapport de transmission thermique ICE2.

La phase P1 comprend une première étape E01 de calcul d'une puissance mécanique cible $P_{mep\_cible\_p1}$. Dans l'exemple illustré, la puissance $P_{mep\_cible\_p1}$ se calcule en appliquant la relation :

$$P_{mep\_cible\_p1} = P_{mep\_no} + P_{ice\_no} + P_{hsg\_no} \qquad (1)$$

où $P_{ice\_no}$, $P_{mep\_no}$ et $P_{hsg\_no}$ correspondent respectivement à la puissance à réaliser par le moteur à combustion interne 2, par la machine électrique principale 3 et par la machine électrique secondaire 4 en dehors du changement de rapport. En d'autres termes, les puissances $P_{ice\_no}$, $P_{mep\_no}$ et $P_{hsg\_no}$ correspondent aux puissances de consigne des actionneurs respectifs du groupe motopropulseur 1 immédiatement avant la fin de la phase d'initialisation P0.

La phase P1 comprend une deuxième étape E02 de test dans laquelle on détermine si la puissance $P_{mep\_cible\_p1}$ est supérieure à une puissance électrique $P_{bat\_pot}$ pouvant être délivrée par la batterie 9 et réalisée par la machine électrique principale 3. En d'autres termes, on détermine au cours de l'étape E02 si la puissance mécanique délivrée par le moteur à combustion interne 2 et/ou par la machine électrique secondaire 4 à l'état initial peut être intégralement compensée par une puissance additionnelle délivrée par la machine électrique principale 3 alimentée par la batterie de stockage 10.

Si $P_{mep\_cible\_p1} > P_{bat\_pot}$, alors on met en œuvre une étape E03 suivante. Si $P_{mep\_cible\_p1} \leq P_{bat\_pot}$, alors on met en œuvre une étape E04.

L'étape E03 a pour but de calculer un triplet de couples cibles des actionneurs du groupe motopropulseur 1. Plus particulièrement, on détermine au cours de l'étape E03 un couple cible $T_{ice\_cible\_p1}$ à appliquer par le moteur 2, un couple cible $T_{mep\_cible\_p1}$ de la machine électrique principale 3 et un couple cible $T_{hsg\_cible\_p1}$ à appliquer par la machine électrique secondaire 4. Pour calculer ces couples, on calcule une puissance cible $P_{ice\_cible\_p1}$ du moteur à combustion interne 2. Cette puissance est calculée en mettant en œuvre l'équation suivante :

$$P_{ice\_cible\_p1} = \min(P_{roues}, P_{hsg\_regen\_max}, P_{ice\_max}) \qquad (2)$$

où $P_{roues}$ désigne la consigne de puissance à fournir aux roues par le groupe motopropulseur 1, $P_{hsg\_regen\_max}$ désigne la puissance électrique maximale pouvant être générée par la machine électrique secondaire 4 fonctionnant en mode régénératif et $P_{ice\_max}$ désigne la puissance mécanique maximale pouvant être fournie par le moteur à combustion interne 2.

De l'équation (2), on déduit les couples cibles :

$$T_{mep\_cible\_p1} = \frac{P_{mep\_cible\_p1}}{\omega_{mep}} \qquad (3)$$

$$T_{ice\_cible\_p1} = \frac{P_{ice\_cible\_p1}}{\omega_{ice}} \qquad (4)$$

$$T_{hsg\_cible\_p1} = -\frac{P_{ice\_cible\_p1}}{\omega_{hsg}} \qquad (5)$$

Dans les équations (4) et (5), la variable $P_{ice\_cible\_p1}$ aurait aussi bien pu être remplacée par la variable $P_{hsg\_cible\_p1}$ qui désigne une puissance cible à réaliser par la machine électrique secondaire 4. Comme cela sera expliqué par la suite, le signe « - » dans l'équation (5) est nécessaire car le couple de la machine électrique secondaire 4 doit être négatif pour fournir de la puissance électrique à la batterie 9.

L'étape E04 vise à calculer le triplet de couples cibles des actionneurs du groupe motopropulseur 1 dans le cas où $P_{mep\_cible\_p1} \leq P_{bat\_pot}$. On applique alors les équations (2) et (3) pour calculer le couple cible $T_{mep\_cible\_p1}$, les couples cibles $T_{ice\_cible\_p1}$ et $T_{hsg\_cible\_p1}$ étant dans ce cas nuls par défaut.

On met ensuite en œuvre une étape E05 de modification des couples $T_{ice}$, $T_{mep}$ et $T_{hsg}$. De manière concomitante, le couple $T_{ice}$ est modifié de sorte à converger vers le couple cible $T_{ice\_cible\_p1}$ et le couple $T_{mep}$ est modifié de sorte à converger vers le couple cible $T_{mep\_cible\_p1}$. Si le couple cible $T_{hsg\_cible\_p1}$ est non nul, la machine électrique secondaire 4 est pilotée en mode régénératif et le couple $T_{hsg}$ est modifié de sorte à converger vers le couple cible $T_{hsg\_cible\_p1}$. Durant l'étape E05, le convertisseur 10 est couplé à la machine électrique principale 3 et à la machine électrique secondaire 4. Durant l'étape E05, les couples $T_{ice}$, $T_{mep}$ et $T_{hsg}$ sont modifiés de sorte à toujours respecter la relation :

$$\frac{T_{ice}}{R_{ICE2}} + \frac{T_{hsg}}{R_{hsg}} + \frac{T_{mep}}{R_{mep}} = cte \qquad (6)$$

où $R_{ICE2}$ désigne le rapport de transmission courant entre l'arbre 5 et l'arbre 7, $R_{hsg}$ désigne le rapport de transmission entre l'arbre 8 et l'arbre 7 et $R_{mep}$ désigne le rapport de transmission entre l'arbre 6 et l'arbre 7.

De cette manière, au cours des étapes de la phase P1, on calcule une puissance électrique générée par la machine électrique secondaire 4 dans le cas où une telle puissance électrique s'avérerait nécessaire pour assister la machine électrique principale pour compenser le trou d'accélération lié à la bascule de couple de l'arbre 5 sur l'arbre 6. Grâce aux équations (2) et (4), le couple $T_{ice}$ est juste suffisant pour fournir à la machine électrique secondaire 4 la puissance mécanique nécessaire pour générer la puissance électrique d'appoint dont a besoin la machine électrique principale 3.

La phase P1 est terminée lorsque l'étape E05 est terminée. A l'issue de la phase P1, le couple sur l'arbre primaire plein 5 est nul. Durant la phase P1, le couple $T_7$ est resté sensiblement constant.

On applique ensuite une phase P2 de désengagement du rapport de transmission thermique ICE2. Au cours de cette phase, on manipule le coupleur C1 de manière à actionner le décrabotage du pignon fou assurant le rapport de transmission ICE2. A l'issue de la phase P2, l'arbre 5 est déconnecté mécaniquement de l'arbre 7.

On applique ensuite une phase P3 de synchronisation de l'arbre primaire plein 5. Au cours de cette phase, on modifie l'alimentation du moteur à combustion interne 2 et de la machine électrique secondaire 4 de telle sorte que la vitesse $\omega_{ice}$ soit synchronisée par rapport à la vitesse $\omega_7$ réduite par le rapport de transmission thermique ICE3.

La phase P3 comprend une première étape E11 de calcul de la vitesse cible $\omega_{ice\_cible}$. Pour ce faire, on applique la relation :

$$\omega_{ice\_cible} = R_{ICE3}.\omega_7 \qquad (7)$$

où $R_{ICE3}$ représente le rapport de transmission thermique ICE3.

La phase P3 comprend une deuxième étape E12 de test dans laquelle on détermine si la puissance $P_{mep\_cible\_p1}$ est supérieure à une puissance électrique $P_{bat\_pot}$ pouvant être délivrée par la batterie 9 et réalisée par la machine électrique 3. Si $P_{mep\_cible\_p1} > P_{bat\_pot}$, alors on met en œuvre une étape E13 suivante. Si $P_{mep\_cible\_p1} \leq P_{bat\_pot}$, alors on met en œuvre une étape E14.

L'étape E13 vise à calculer un couple cible $T_{ice\_cible\_p3}$ à appliquer par le moteur 2 et un couple cible $T_{hsg\_cible\_p3}$ à appliquer par la machine électrique secondaire 4 en phase de régulation du régime de rotation de l'arbre 5. Pour arriver à ce résultat, on détermine une puissance cible $P_{ice\_cible\_p3}$ du moteur 2 :

$$P_{ice\_cible\_p3} = \min(P_{roues}, P_{hsg\_regen\_max}, P_{ice\_max}) \qquad (8)$$

Les couples cibles sont ensuite déterminés par les relations :

$$T_{ice\_cible\_p3} = \frac{P_{ice\_cible\_p3}}{\omega_{cible}} + T\_prop + T\_int \qquad (9)$$

$$T_{hsg\_cible\_p3} = -\frac{P_{ice\_cible\_p3}}{\omega_{cible} \cdot R_{8/5}} \qquad (10)$$

où $R_{8/5}$ correspond au rapport de transmission reliant l'arbre 5 à l'arbre 8,
T_prop correspond à un terme proportionnel, et
T_int correspond à un terme intégral.

Dans l'équation (10), les termes proportionnel et intégral sont tous les deux présents. Toutefois, il est bien entendu possible d'envisager, sans sortir du cadre de l'invention, un terme de régulation du régime constitué seulement par l'un de ces deux termes.

Le couple cible $T_{mep\_cible\_p3}$ de la machine électrique principale 3 en phase de régulation du régime de rotation de l'arbre 5 est toujours calculé selon la même équation :

$$T_{mep\_cible\_p3} = T_{mep\_cible\_p1} \qquad (11)$$

L'étape E14 vise à déterminer le triplet de couples cibles dans le cas où $P_{mep\_cible\_p3} \leq P_{bat\_pot}$. Dans ce cas, le couple cible $P_{mep\_cible\_p3}$ est défini selon l'équation (11) tandis que le couple cible $T_{hsg\_cible\_p3}$ est défini égal à zéro et le couple cible $T_{ice\_cible\_p3}$ varie seulement en fonction des termes proportionnel et intégral.

Que l'on applique ou non l'étape E13 ou E14, il s'agit d'une étape d'ajustement du couple $T_{ice}$ et de la vitesse de rotation $\omega_{ice}$ du moteur 2 et du couple $T_{hsg}$ de la machine électrique secondaire 4 afin de faire converger cette vitesse $\omega_{ice}$ vers la vitesse cible.

Si le couple cible $T_{hsg\_cible\_p3}$ est non nul, la machine électrique secondaire 4 est pilotée en mode régénératif et on fait converger le couple $T_{hsg}$ vers le couple cible $T_{hsg\_cible\_p3}$. Dans le même temps, le convertisseur 10 est couplé à la machine électrique principale 3 et à la machine électrique secondaire 4.

De cette manière, au cours de l'étape E13 ou E14, on réalise la synchronisation de l'arbre 5 tout en permettant, si nécessaire, de continuer à fournir à la machine électrique secondaire 4 la puissance mécanique nécessaire pour générer la puissance électrique d'appoint dont a besoin la machine électrique principale 3.

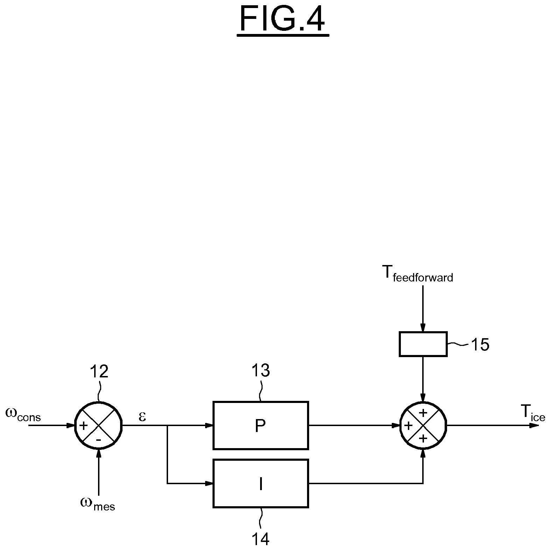

Au cours de l'étape E13 ou E14, on met en œuvre un asservissement du couple $T_{ice}$. L'asservissement mis en œuvre est schématiquement représenté sur la figure 4. Bien qu'il soit ici décrit un asservissement du couple $T_{ice}$, il est bien entendu possible, sans sortir du cadre de l'invention, de mettre en œuvre le même asservissement du couple $T_{hsg}$. Toutefois, dans ce cas, la puissance d'appoint fournie à la machine électrique 3 ne peut pas être constante. De ce fait, il est plutôt avantageux d'asservir le couple $T_{ice}$.

Au vu de la figure 4, l'asservissement du couple $T_{ice}$ est réalisé par une fonction en boucle ouverte. La boucle ouverte comprend un comparateur 12 calculant l'écart $\varepsilon$ entre une consigne de vitesse de rotation $\omega_{cons}$ de l'arbre 5 et une vitesse de rotation mesurée $\omega_{mes}$. La consigne de vitesse $\omega_{cons}$ pourra être obtenue en sortie d'une cartographie (non représentée) contenant des valeurs de consigne en fonction d'une vitesse cible $\omega_{ice\_cible}$ et d'un temps t écoulé depuis le début de l'étape E13 ou E14.

L'écart $\varepsilon$ est corrigé par un premier correcteur 13. Le correcteur 13 est du type proportionnel (P) et applique un gain G variable. Plus particulièrement, le gain G varie en fonction de l'écart entre la vitesse de rotation mesurée $\omega_{mes}$ et la vitesse cible $\omega_{ice\_cible}$. Plus cet écart est grand, plus le gain G sera important. Le gain G varie également en fonction de la valeur de la vitesse cible $\omega_{ice\_cible}$.

Pour obtenir le gain G, on peut utiliser une ou plusieurs cartographie(s) contenant des valeurs de gain en fonction du type de synchronisation à réaliser (augmentation ou baisse du régime de rotation de l'arbre 5), de la dynamique du moteur 2 dépendant en particulier de l'accélération de l'arbre 5.

L'écart $\varepsilon$ est corrigé par un deuxième correcteur 14. Le correcteur 14 est du type intégral (I). Le correcteur 14 est configuré pour n'être activé que lorsque l'écart $\varepsilon$ est inférieur à un seuil $\varepsilon_{mini}$ prédéfini. Le correcteur 14 permet de stabiliser la vitesse de rotation $\omega_{ice}$ lorsque l'on s'approche de la consigne visée pour permettre d'assurer un écart nul entre le régime mesuré et la consigne de régime.

L'écart $\varepsilon$ est corrigé par un troisième correcteur 15. Le correcteur 15 est un correcteur à contrôle anticipé, également connu sous la dénomination anglo-saxonne comme « feedforward controller ». Le correcteur 15 est paramétré avec le couple cible $T_{ice\_cible\_p3}$ calculé à l'étape E13. Le correcteur 15 permet de prendre en compte la machine électrique secondaire 4 lors de l'élaboration de la correction du couple $T_{ice}$.

Au vu de ce qui précède, les étapes E13 et E14 permettent de piloter le moteur 2 de manière à réaliser la synchronisation en continuant, si nécessaire, de fournir de la puissance mécanique à la machine électrique secondaire 4, tout en assurant que la puissance mécanique fournie par le moteur 2 à la machine électrique secondaire 4 soit juste suffisante pour générer la puissance électrique d'appoint dont la machine électrique principale 3 a besoin pour compenser la bascule de couple de la phase P1 sans occasionner de trou d'accélération.

La phase P3 est terminée lorsque l'étape E13 ou l'étape E14 est terminée. A l'issue de la phase P3, la vitesse $\omega_{ice}$ de l'arbre primaire plein 5 est synchronisée par rapport à la vitesse $\omega_7$ de l'arbre secondaire 7 ramenée au rapport de transmission ICE3 :

$$\omega_{ice\_cible} = R_{ICE3}.\omega_7 \qquad\qquad (12)$$

On met ensuite en œuvre une phase P4 d'engagement du rapport de transmission thermique ICE3. Au cours de cette phase, on manipule le coupleur à crabots C1 de manière à actionner le crabotage du pignon fou correspondant au rapport de transmission thermique ICE3. À l'issue de la phase P4, la boîte de vitesses est engagée selon le rapport hybride Hyb32.

On met alors en œuvre une phase P5 de bascule du couple de l'arbre 6 sur l'arbre 5. On pilote de cette manière le groupe motopropulseur 1 vers une sortie du changement de rapport de vitesses. A l'issue de la phase P5, le procédé est terminé.

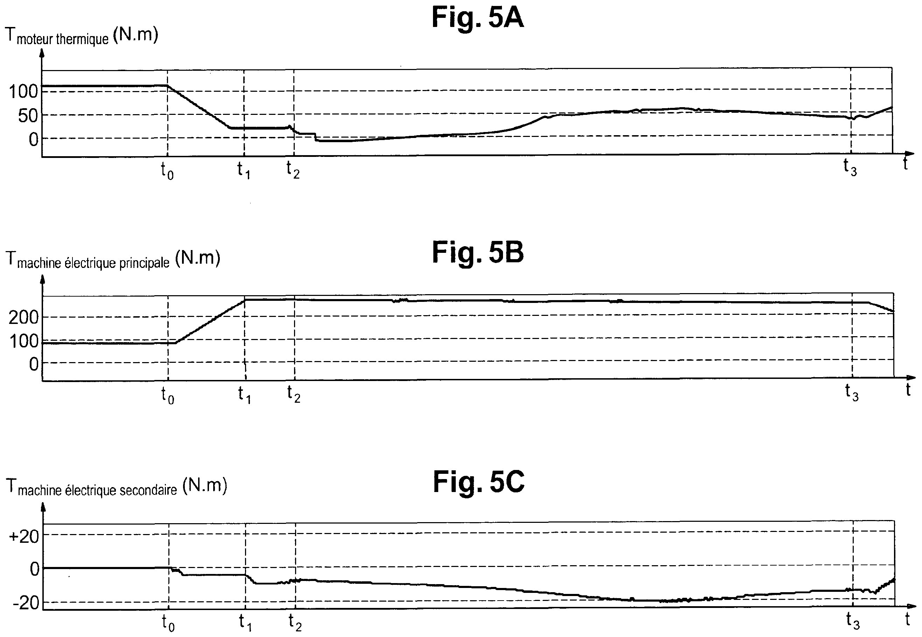

En référence aux figures 5A à 5C, on a schématiquement représenté les évolutions respectives des couples $T_{ice}$, $T_{mep}$ et $T_{hsg}$ en fonction du temps t au cours du procédé de la figure 3.

Sur le graphe des figures 5A à 5C, l'instant $t_0$ correspond à l'instant de fin de la phase d'initialisation P0. L'instant $t_1$ correspond à l'instant de fin de l'étape E05 de la phase P1. L'instant $t_2$ correspond à l'instant de fin de la phase P2. L'instant $t_3$ correspond à l'instant de fin de la phase P4.

Comme cela est visible sur les figures 5A et 5B, le couple $T_{ice}$ diminue lors de la phase P1 en réponse à une augmentation du couple $T_{mep}$. Alors que, de manière conventionnelle, le couple $T_{ice}$ aurait du être diminué jusqu'à zéro pour permettre le début de la phase P2, le couple $T_{ice}$ est maintenu non nul pour fournir une puissance mécanique à la machine électrique secondaire. Le couple $T_{hsg}$ s'éloigne alors de zéro en valeurs négatives, de sorte que la machine électrique secondaire génère une puissance électrique d'appoint. Cette puissance électrique est fournie à la machine électrique principale qui peut augmenter son couple $T_{mep}$ de sorte à compenser intégralement l'annulation du couple de l'arbre 5.

Au début de la phase 3, le couple $T_{ice}$ est sensiblement nul, voire strictement négatif, tandis que le couple $T_{hsg}$ est relativement éloigné de zéro en valeur négative. La machine électrique secondaire 4 prélève alors de la puissance mécanique de l'arbre 5 pour mettre en œuvre la synchronisation de l'arbre 5 en générant de la puissance électrique. A un stade plus avancé de la phase 3, le couple $T_{ice}$ est augmenté pour maintenir le niveau de génération de puissance électrique de la machine électrique secondaire 4 alors que la vitesse de rotation $\omega_{hsg}$ diminue.

Au vu de ce qui précède, le procédé selon l'invention permet de mettre en œuvre un changement de rapport de vitesse nécessitant l'engagement d'un rapport de transmission thermique du rapport de sortie en évitant l'apparition de désagréments pour les utilisateurs tels que des trous d'accélérations.

Le convertisseur élévateur de tension 10 est particulièrement avantageux lorsqu'utilisé en combinaison avec le procédé qui vient d'être décrit. En effet, ce convertisseur permet d'optimiser la génération de puissance électrique par la machine électrique secondaire 4 lorsque celle-ci est pilotée en mode régénératif et d'optimiser la génération de puissance mécanique par la machine électrique principale 3.

## Revendications

1. Procédé de pilotage d'un groupe motopropulseur (1) de véhicule automobile comprenant un moteur à combustion interne (2), une machine électrique principale (3) connectée électriquement avec une batterie de stockage (9), une machine électrique secondaire (4) connectée électriquement avec ladite batterie de stockage (9), et au moins une boîte de vitesses à crabots pilotés comportant un premier arbre primaire (5) connecté mécaniquement avec le moteur à combustion interne (2) et avec la machine électrique secondaire (4), un second arbre primaire (6) connecté mécaniquement avec la machine électrique principale (3), et un arbre secondaire (7), dans lequel on synchronise (P3) le régime de rotation ($\omega_{ice}$) du premier arbre primaire (5), puis on engage (P4) le rapport de transmission thermique d'un rapport de sortie, et on bascule (P5) du couple ($T_{mep}$) depuis le second arbre primaire (6) sur le premier arbre primaire (5), dans lequel, lorsque l'on synchronise (P3) le régime de rotation ($\omega_{ice}$) du premier arbre primaire (5), si la consigne de puissance ($P_{mep\_cible\_p3}$) est trop importante pour être atteinte par la machine électrique principale (3) alimentée seulement par la batterie de stockage (9), on force (E14) la machine électrique secondaire (4) en mode régénératif et on utilise la puissance électrique générée par la machine électrique secondaire (4) pour fournir une puissance électrique d'appoint à la machine électrique principale (3).

2. Procédé selon la revendication 1, dans lequel lorsque l'on fournit une puissance électrique d'appoint à la machine électrique principale (3), on couple ladite machine électrique principale (3) et/ou ladite machine électrique secondaire (4) à un convertisseur élévateur de tension (10).

3. Procédé selon la revendication 1 ou 2 dans lequel, avant de synchroniser le régime de rotation ($\omega_{ice}$) du premier arbre primaire (5), on bascule (P1) du couple ($T_{ice}$) du premier arbre primaire (5) sur le second arbre primaire (6), puis on désengage (P2) le rapport de transmission thermique d'un rapport d'entrée, et dans lequel, lorsque l'on bascule (P1) du couple ($T_{ice}$) du premier arbre primaire (5) sur le second arbre primaire (6), si la consigne de puissance ($P_{mep\_cible\_p1}$) est trop importante pour être atteinte par la machine électrique principale (3) alimentée seulement par la batterie de stockage (9), on force (E05) la machine électrique secondaire (4) en mode régénératif et on utilise la puissance électrique générée par la machine électrique secondaire (4) pour fournir une puissance électrique d'appoint à la machine électrique principale (3).

4. Procédé selon la revendication 3 dans lequel, lorsque l'on bascule (P1) du couple ($T_{ice}$) du premier arbre primaire (5) sur le second arbre primaire (6), on détermine (E03, E04) une première consigne ($T_{ice\_cible\_p1}$) du couple du moteur à combustion interne (2) et une deuxième consigne ($T_{hsg\_cible\_p1}$) du couple de la machine électrique secondaire (4), et on pilote (E05) le moteur à combustion interne (2) et la machine électrique secondaire (4) en fonction des première et deuxième consignes du couple, lesdites première et deuxième consignes étant déterminées en appliquant les équations :

$$P_{ice\_cible\_p1} = \min(P_{roues}, P_{hsg\_regen\_max}, P_{ice\_max})$$

$$T_{ice\_cible\_p1} = \frac{P_{ice\_cible\_p1}}{\omega_{ice}}$$

$$T_{hsg\_cible\_p1} = -\frac{P_{ice\_cible\_p1}}{\omega_{hsg}}$$

où $P_{ice\_cible\_p1}$ représente une première puissance cible à réaliser par le moteur à combustion interne (2),

$P_{roues}$ représente une consigne de puissance à fournir aux roues du véhicule,

$P_{hsg\_regen\_max}$ représente une puissance électrique maximale pouvant être obtenue par la machine électrique secondaire (4) fonctionnant en mode régénératif,

$P_{ice\_max}$ représente la puissance maximale pouvant être délivrée par le moteur à combustion interne (2),

$T_{ice\_cible\_p1}$ représente la première consigne,

$\omega_{ice}$ représente le régime de rotation du moteur à combustion interne (2),

$T_{hsg\_cible\_p1}$ représente la deuxième consigne, et

$\omega_{hsg}$ représente le régime de rotation de la machine électrique secondaire (4).

5. Procédé selon l'une quelconque des revendications 1 à 4, dans lequel, lorsque l'on synchronise (P3) le régime de rotation ($\omega_{ice}$) du premier arbre primaire (5), on détermine une troisième consigne de couple ($T_{ice\_cible\_p3}$) du moteur à combustion interne (2) et une quatrième consigne de couple ($T_{hsg\_cible\_p3}$) de la machine électrique secondaire (4), et on pilote (E13, E14) le moteur à combustion interne (2) et la machine électrique secondaire (4) en fonction des troisième et quatrième consignes de couple, ladite troisième consigne et ladite quatrième consigne étant déterminées en appliquant les équations suivantes :

$$P_{ice\_cible\_p3} = \min(P_{roues}, P_{hsg\_regen\_max}, P_{ice\_max})$$

$$T_{ice\_cible\_p3} = \frac{P_{ice\_cible\_p3}}{\omega_{ice}} + T\_regulation\_\omega$$

$$T_{hsg\_cible\_p3} = -\frac{P_{ice\_cible\_p3}}{\omega_{hsg}}$$

où $P_{ice\_cible\_p3}$ représente une deuxième puissance cible à réaliser par le moteur à combustion interne (2),

$P_{roues}$ représente une consigne de puissance à fournir aux roues du véhicule,

$P_{hsg\_regen\_max}$ représente une puissance électrique maximale pouvant être obtenue par la machine électrique secondaire (4) fonctionnant en mode régénératif,

$P_{ice\_max}$ représente la puissance maximale pouvant être délivrée par le moteur à combustion interne (2),

$T_{ice\_cible\_p3}$ représente la troisième consigne,

$\omega_{ice}$ représente le régime de rotation du moteur à combustion interne (2),

$T_{hsg\_cible\_p3}$ représente la quatrième consigne,

$\omega_{hsg}$ représente le régime de rotation de la machine électrique secondaire (4), et

$T\_regulation\_\omega$ est un terme de régulation du régime.

6. Procédé selon l'une quelconque des revendications 1 à 5 dans lequel, lorsque l'on synchronise (P3) le régime de rotation ($\omega_{ice}$) du premier arbre primaire (5), on met en œuvre une étape (E13, E14) d'asservissement du couple ($T_{ice}$) du moteur à combustion interne (2) et/ou du couple ($T_{hsg}$) de la machine électrique secondaire (4) avec un correcteur proportionnel (12).

7. Procédé selon la revendication 6 dans lequel, lors de ladite étape d'asservissement (E13, E14), on saisit dans une cartographie au moins un paramètre choisi parmi un écart ($\varepsilon$) entre un régime courant de rotation ($\omega_{ice}$) du premier arbre primaire (5) et un régime cible de rotation ($\omega_{cible}$), un type de synchronisation à réaliser et une dynamique du régime de rotation ($\omega_{ice}$) du moteur à combustion interne (2), on recueille une valeur de gain (G) en sortie de ladite cartographie et on applique le gain (G) recueilli dans ledit correcteur proportionnel (12).

8. Procédé selon l'une quelconque des revendications 1 à 7 dans lequel, lorsque l'on synchronise (P3) le régime de rotation ($\omega_{ice}$) du premier arbre primaire (5), on met en œuvre une étape d'asservissement (E15) du couple ($\omega_{ice}$)

du moteur à combustion interne (5) et/ou du couple ($T_{hsg}$) de la machine électrique secondaire (4) avec un correcteur intégral (13).

9. Procédé selon la revendication 8 dans lequel ledit correcteur intégral (13) est activé à partir d'un instant où l'écart ($\varepsilon$) entre une consigne de vitesse ($\omega_{cible}$) et une vitesse mesurée ($\omega_{ice}$) devient inférieur à un seuil prédéfini ($\varepsilon_{mini}$).

10. Procédé selon l'une quelconque des revendications 1 à 9 dans lequel, lorsque l'on synchronise (P3) le régime de rotation ($\omega_{ice}$) du premier arbre primaire (5), on calcule (E13, E14) au moins une consigne de couple ($T_{ice\_cible\_p3}$) et on met en œuvre une étape d'asservissement du couple ($T_{ice}$) du moteur à combustion interne (5) et/ou du couple ($T_{hsg}$) de la machine électrique secondaire (4) au moyen d'un correcteur par contrôle anticipé (15) paramétré avec ladite consigne de couple ($T_{ice\_cible\_p3}$).

**Patentansprüche**

1. Verfahren zur Steuerung einer Kraftfahrzeug-Antriebseinheit (1), die einen Verbrennungsmotor (2), eine Haupt-Elektromaschine (3), die mit einer Speicherbatterie (9) elektrisch verbunden ist, eine Sekundär-Elektromaschine (4), die mit der Speicherbatterie (9) elektrisch verbunden ist, und mindestens ein Getriebe mit gesteuerten Klauen, das eine erste Primärwelle (5), die mit dem Verbrennungsmotor (2) und mit der Sekundär-Elektromaschine (4) mechanisch verbunden ist, eine zweite Primärwelle (6), die mit der Haupt-Elektromaschine (3) mechanisch verbunden ist, und eine Sekundärwelle (7) aufweist, umfasst, wobei die Drehzahl ($\omega_{ice}$) der ersten Primärwelle (5) synchronisiert (P3), dann das Verbrennungs-Übersetzungsverhältnis eines Ausgangsverhältnisses eingelegt (P4) und Drehmoment ($T_{mep}$) von der zweiten Primärwelle (6) auf die erste Primärwelle (5) geschaltet (P5) wird, wobei, wenn die Drehzahl ($\omega_{ice}$) der ersten Primärwelle (5) synchronisiert (P3) wird, wenn der Leistungssollwert ($P_{mep\_ziel\_p3}$) zu hoch ist, um von der Haupt-Elektromaschine (3) erreicht zu werden, die nur von der Speicherbatterie (9) gespeist wird, die Sekundär-Elektromaschine (4) in den regenerativen Modus gezwungen (E14) wird und die elektrische Leistung, die von der Sekundär-Elektromaschine (4) erzeugt wird, dafür genutzt wird, der Haupt-Elektromaschine (3) eine elektrische Zusatzleistung bereitzustellen.

2. Verfahren nach Anspruch 1, wobei, wenn eine elektrische Zusatzleistung der Haupt-Elektromaschine (3) bereitgestellt wird, die Haupt-Elektromaschine (3) und/oder die Sekundär-Elektromaschine (4) an einen Aufwärtswandler (10) gekoppelt wird.

3. Verfahren nach Anspruch 1 oder 2, wobei, bevor die Drehzahl ($\omega_{ice}$) der ersten Primärwelle (5) synchronisiert wird, Drehmoment ($T_{ice}$) von der ersten Hauptwelle (5) auf die zweite Primärwelle (6) geschaltet (P1), dann das Verbrennungs-Übersetzungsverhältnis eines Eingangsverhältnisses ausgekuppelt (P2) wird, und wobei, wenn Drehmoment ($T_{ice}$) von der ersten Primärwelle (5) auf die zweite Primärwelle (6) geschaltet (P1) wird, wenn der Leistungssollwert ($P_{mep\_ziel\_p1}$) zu hoch ist, um von der Haupt-Elektromaschine (3) erreicht zu werden, die nur von der Speicherbatterie (9) gespeist wird, die Sekundär-Elektromaschine (4) in den regenerativen Modus gezwungen (E05) wird und die elektrische Leistung, die von der Sekundär-Elektromaschine (4) erzeugt wird, dafür genutzt wird, der Haupt-Elektromaschine (3) eine elektrische Zusatzleistung bereitzustellen.

4. Verfahren nach Anspruch 3, wobei, wenn Drehmoment ($T_{ice}$) von der ersten Primärwelle (5) auf die zweite Primärwelle (6) geschaltet (P1) wird, ein erster Sollwert ($T_{ice\_ziel\_p1}$) des Drehmoments des Verbrennungsmotors (2) und ein zweiter Sollwert ($T_{hsg\_ziel\_p1}$) des Drehmoments der Sekundär-Elektromaschine (4) bestimmt (E03, E04) wird und der Verbrennungsmotor (2) und die Sekundär-Elektromaschine (4) in Abhängigkeit vom ersten und zweiten Sollwert des Drehmoments gesteuert (E05) werden, wobei der erste und zweite Sollwert unter Anwendung der folgenden Gleichungen bestimmt werden:

$$P_{ice\_ziel\_p1} = \min(P_{r\ddot{a}der}, P_{hsg\_regen\_max}, P_{ice\_max})$$

$$T_{ice\_ziel\_p1} = \frac{P_{ice\_ziel\_p1}}{\omega_{ice}}$$

$$T_{hsg\_ziel\_p1} = \frac{P_{ice\_ziel\_p1}}{\omega_{hsg}}$$

wobei $P_{ice\_ziel\_p1}$ eine erste Zielleistung ist, die vom Verbrennungsmotor (2) herzustellen ist,
$P_{räder}$ einen Sollwert einer Leistung darstellt, die an den Rädern des Fahrzeugs bereitzustellen ist,
$P_{hsg\_regen\_max}$ eine maximale elektrische Leistung darstellt, die von der Sekundär-Elektromaschine (4) erhalten werden kann, die im regenerativen Modus arbeitet,
$P_{ice\_max}$ die maximale Leistung darstellt, die vom Verbrennungsmotor (2) geliefert werden kann,
$T_{ice\_ziel\_p1}$ den ersten Sollwert darstellt,
$\omega_{ice}$ die Drehzahl des Verbrennungsmotors (2) darstellt,
$T_{hsg\_ziel\_p1}$ den zweiten Sollwert darstellt, und
$\omega_{hsg}$ die Drehzahl der Sekundär-Elektromaschine (4) darstellt.

5. Verfahren nach einem der Ansprüche 1 bis 4, wobei, wenn die Drehzahl ($\omega_{ice}$) der ersten Primärwelle (5) synchronisiert (P3) wird, ein dritter Drehmomentsollwert ($T_{ice\_ziel\_p3}$) des Verbrennungsmotors (2) und ein vierter Drehmomentsollwert ($T_{hsg\_ziel\_p3}$) der Sekundär-Elektromaschine (4) bestimmt wird und der Verbrennungsmotor (2) und die Sekundär-Elektromaschine (4) in Abhängigkeit vom dritten und vierten Drehmomentsollwert angesteuert (E13, E14) werden, wobei der dritte Sollwert und der vierte Sollwert unter Anwendung der folgenden Gleichungen bestimmt werden:

$$P_{ice\_ziel\_p3} = \min(P_{räder}, P_{hsg\_regen\_max}, P_{ice\_max})$$

$$T_{ice\_ziel\_p3} = \frac{P_{ice\_ziel\_p3}}{\omega_{ice}} + T\_regulierung\_\omega$$

$$T_{hsg\_ziel\_p3} = \frac{P_{ice\_ziel\_p3}}{\omega_{hsg}}$$

wobei $P_{ice\_ziel\_p3}$ eine zweite Zielleistung ist, die vom Verbrennungsmotor (2) herzustellen ist,
$P_{räder}$ einen Sollwert einer Leistung darstellt, die an den Rädern des Fahrzeugs bereitzustellen ist,
$P_{hsg\_regen\_max}$ eine maximale elektrische Leistung darstellt, die von der Sekundär-Elektromaschine (4) erhalten werden kann, die im regenerativen Modus arbeitet,
$P_{ice\_max}$ die maximale Leistung darstellt, die vom Verbrennungsmotor (2) geliefert werden kann,
$T_{ice\_ziel\_p3}$ den dritten Sollwert darstellt,
$\omega_{ice}$ die Drehzahl des Verbrennungsmotors (2) darstellt,
$T_{hsg\_ziel\_p3}$ den vierten Sollwert darstellt,
$\omega_{hsg}$ die Drehzahl der Sekundär-Elektromaschine (4) darstellt, und
$T\_regulierung\_\omega$ ein Term der Drehzahlregulierung ist.

6. Verfahren nach einem der Ansprüche 1 bis 5, wobei, wenn die Drehzahl ($\omega_{ice}$) der ersten Primärwelle (5) synchronisiert (P3) wird, ein Schritt (E13, E14) des Regelns des Drehmoments ($T_{ice}$) des Verbrennungsmotors (2) und/oder des Drehmoments ($T_{hsg}$) der Sekundär-Elektromaschine (4) mit einem Proportionalkorrektor (12) durchgeführt wird.

7. Verfahren nach Anspruch 6, wobei beim Schritt des Regelns (E13, E14) mindestens ein Parameter in einer Kartografie erfasst wird, der aus einer Abweichung ($\varepsilon$) zwischen einer aktuellen Drehzahl ($\omega_{ice}$) der ersten Primärwelle (5) und einer Zieldrehzahl ($\omega_{ziel}$), einer Art von durchzuführender Synchronisation und einer Dynamik der Drehzahl ($\omega_{ice}$) des Verbrennungsmotors (2) gewählt ist, ein Verstärkungswert (G) am Ausgang der Kartografie erfasst wird und die erhaltene Verstärkung (G) im Proportionalkorrektor (12) angewandt wird.

8. Verfahren nach einem der Ansprüche 1 bis 7, wobei, wenn die Drehzahl ($\omega_{ice}$) der ersten Primärwelle (5) synchronisiert (P3) wird, ein Schritt des Regelns (E15) des Drehmoments ($\omega_{ice}$) des Verbrennungsmotors (5) und/oder des Drehmoments ($T_{hsg}$) der Sekundär-Elektromaschine (4) mit einem Integralkorrektor (13) durchgeführt wird.

9. Verfahren nach Anspruch 8, wobei der Integralkorrektor (13) von einem Zeitpunkt an aktiviert wird, zu dem die

Abweichung ($\varepsilon$) zwischen einem Geschwindigkeitssollwert ($\omega_{ziel}$) und einer gemessenen Geschwindigkeit ($\omega_{ice}$) unter eine vorgegebene Schwelle ($\varepsilon_{mini}$) fällt.

10. Verfahren nach einem der Ansprüche 1 bis 9, wobei, wenn die Drehzahl ($\omega_{ice}$) der ersten Primärwelle (5) synchronisiert (P3) wird, mindestens ein Drehmomentsollwert ($T_{ice\_ziel\_p3}$) berechnet (E13, E14) wird und ein Schritt des Regelns des Drehmoments ($T_{ice}$) des Verbrennungsmotors (5) und/oder des Drehmoments ($T_{hsg}$) der Sekundär-Elektromaschine (4) mittels eines Korrektors mit Vorsteuerung (15) durchgeführt wird, der mit dem Drehmomentsollwert ($T_{ice\_ziel\_p3}$) parametriert ist.

**Claims**

1. Method for controlling a motor vehicle power train (1) comprising an internal combustion engine (2), a main electric machine (3) electrically connected to a storage battery (9), a secondary electric machine (4) electrically connected to said storage battery (9), and at least one dog gearbox comprising a first primary shaft (5) mechanically connected to the internal combustion engine (2) and to the secondary electric machine (4), a second primary shaft (6) mechanically connected to the main electric machine (3), and a secondary shaft (7), in which the rotational speed ($\omega_{ice}$) of the first primary shaft (5) is synchronized (P3), then the combustion engine transmission ratio for an output ratio is engaged (P4), and torque ($T_{mem}$) is switched (P5) from the second primary shaft (6) to the first primary shaft (5), in which, when the rotational speed ($\omega_{ice}$) of the first primary shaft (5) is synchronized (P3), if the power setpoint ($P_{mem\_target\_p3}$) is too high to be achieved by the main electric machine (3) powered only by the storage battery (9), the secondary electric machine (4) is forced (S14) into a regenerative mode and the electrical power generated by the secondary electric machine (4) is used to supply top-up electrical power to the main electric machine (3).

2. Method according to Claim 1 in which, when top-up electrical power is supplied to the main electric machine (3), said main electric machine (3) and/or said secondary electric machine (4) is coupled to a step-up converter (10).

3. Method according to Claim 1 or 2 in which, before the rotational speed ($\omega_{ice}$) of the first primary shaft (5) is synchronized, torque ($T_{ice}$) is switched (P1) from the first primary shaft (5) to the second primary shaft (6), then the combustion engine transmission ratio for an input ratio is disengaged (P2), and in which, when torque ($T_{ice}$) is switched (P1) from the first primary shaft (5) to the second primary shaft (6), if the power setpoint ($P_{mem\_target\_p1}$) is too high to be achieved by the main electric machine (3) powered only by the storage battery (9), the secondary electric machine (4) is forced into regenerative mode (S05) and the electrical power generated by the secondary electric machine (4) is used to supply top-up electrical power to the main electric machine (3).

4. Method according to Claim 3 in which, when torque ($T_{ice}$) is switched (P1) from the first primary shaft (5) to the second primary shaft (6), a first torque setpoint ($T_{ice\_target\_p1}$) of the internal combustion engine (2) and a second torque setpoint ($T_{hsg\_target\_p1}$) of the secondary electric machine (4) are determined (S03, S04), and the internal combustion engine (2) and the secondary electric machine (4) are controlled (S05) as a function of the first and second torque setpoints, said first and second setpoints being determined by applying the following equations:

$$P_{ice\_target\_p1} = \min(P_{wheels}, P_{hsg\_regen\_max}, P_{ice\_max})$$

$$T_{ice\_target\_p1} = \frac{P_{ice\_target\_p1}}{\omega_{ice}}$$

$$T_{hsg\_target\_p1} = -\frac{P_{ice\_target\_p1}}{\omega_{hsg}}$$

where $P_{ice\_target\_p1}$ is a first target power to be produced by the internal combustion engine (2),
$P_{wheels}$ is a power setpoint to be supplied to the wheels of the vehicle,
$P_{hsg\_regen\_max}$ is a maximum electrical power that can be achieved by the secondary electric machine (4) operating in regenerative mode,
$P_{ice\_max}$ is the maximum power that can be delivered by the internal combustion engine (2),
$T_{ice\_target\_p1}$ is the first setpoint,

$\omega_{ice}$ is the rotational speed of the internal combustion engine (2),

$T_{hsg\_target\_p1}$ is the second setpoint, and

$\omega_{hsg}$ is the rotational speed of the secondary electric machine (4).

5. Method according to any one of Claims 1 to 4 in which, when the rotational speed ($\omega_{ice}$) of the first primary shaft (5) is synchronized (P3), a third torque setpoint ($T_{ice\_target\_p3}$) of the internal combustion engine (2) and a fourth torque setpoint ($T_{hsg\_target\_p3}$) of the secondary electric machine (4) are determined, and the internal combustion engine (2) and the secondary electric machine (4) are controlled (S13, S14) as a function of the third and fourth torque setpoints, said third setpoint and said fourth setpoint being determined by applying the following equations:

$$P_{ice\_target\_p3} = \min( P_{wheels}, P_{hsg\_regen\_max}, P_{ice\_max})$$

$$T_{ice\_target\_p3} = \frac{P_{ice\_target\_p3}}{\omega_{ice}} + T\_regulation\_\omega$$

$$T_{hsg\_target\_p3} = \frac{P_{ice\_target\_p3}}{\omega_{hsg}}$$

where $P_{ice\_target\_p3}$ is a second target power to be produced by the internal combustion engine (2),

$P_{wheels}$ is a power setpoint to be supplied to the wheels of the vehicle,

$P_{hsg\_regen\_max}$ is a maximum electrical power that can be achieved by the secondary electric machine (4) operating in regenerative mode,

$P_{ice\_max}$ is the maximum power that can be delivered by the internal combustion engine (2),

$T_{ice\_target\_p3}$ is the third setpoint,

$\omega_{ice}$ is the rotational speed of the internal combustion engine (2),

$T_{hsg\_target\_p3}$ is the fourth setpoint,

$\omega_{hsg}$ is the rotational speed of the secondary electric machine (4), and

$T\_regulation\_\omega$ is a speed regulation term.

6. Method according to any one of Claims 1 to 5 in which, when the rotational speed ($\omega_{ice}$) of the first primary shaft (5) is synchronized (P3), a step (S13, S14) of controlling the torque ($T_{ice}$) from the internal combustion engine (2) and/or the torque ($T_{hsg}$) from the secondary electric machine (4) using a proportional controller (12) is implemented.

7. Method according to Claim 6 in which, during said control step (S13, S14) at least one parameter selected from a deviation ($\varepsilon$) between a current rotational speed ($\omega_{ice}$) of the first primary shaft (5) and a target rotational speed ($\omega_{target}$), a type of synchronization to be achieved and the rotational speed ($\omega_{ice}$) dynamics of the internal combustion engine (2) is entered into a map, a gain (G) value is retrieved as an output from said map and the gain (G) retrieved is applied in said proportional controller (12).

8. Method according to any one of Claims 1 to 7 in which, when the rotational speed ($\omega_{ice}$) of the first primary shaft (5) is synchronized (P3), a step (S15) of controlling the torque ($\omega_{ice}$) from the internal combustion engine (5) and/or the torque ($T_{hsg}$) from the secondary electric machine (4) using an integral controller (13) is implemented.

9. Method according to Claim 8, in which said integral controller (13) is activated from a time when the deviation ($\varepsilon$) between a speed setpoint ($\omega_{target}$) and a measured speed ($\omega_{ice}$) falls below a predefined threshold ($\varepsilon_{min}$).

10. Method according to any one of Claims 1 to 9 in which, when the rotational speed ($\omega_{ice}$) of the first primary shaft (5) is synchronized (P3), at least one torque setpoint ($T_{ice\_target\_p3}$) is calculated (S13, S14) and a step of controlling the torque ($T_{ice}$) from the internal combustion engine (5) and/or the torque ($T_{hsg}$) from the secondary electric machine (4) by means of a feed-forward controller (15) configured with said torque setpoint ($T_{ice\_target\_p3}$) is implemented.

# FIG.1

# FIG.2

# FIG.3

# FIG.4

Fig. 5A

$T_{moteur\ thermique}$ (N.m)

Fig. 5B

$T_{machine\ électrique\ principale}$ (N.m)

Fig. 5C

$T_{machine\ électrique\ secondaire}$ (N.m)

EP 3 694 736 B1

**EP 3 694 736 B1**

**Documents brevets cités dans la description**

- WO 2016194172 A1
- US 2011098151 A1
- US 2017122419 A1
- FR 3007696